Europäisches Patentamt

European Patent Office

Office européen des brevets

(11) Veröffentlichungsnummer: **0 041 130 B1**

# (12) EUROPÄISCHE PATENTSCHRIFT

(45) Veröffentlichungstag der Patentschrift:
06.02.85

(21) Anmeldenummer: 81103255.6

(22) Anmeldetag: 30.04.81

(51) Int. Cl.⁴: **C 08 G 69/26**

(54) **Transparente Polyamide.**

(30) Priorität: 30.05.80 DE 3020576

(43) Veröffentlichungstag der Anmeldung:
09.12.81 Patentblatt 81/49

(45) Bekanntmachung des Hinweises auf die Patenterteilung:
06.02.85 Patentblatt 85/6

(84) Benannte Vertragsstaaten:
AT BE CH DE FR GB IT LI LU NL SE

(56) Entgegenhaltungen:
FR - A - 2 117 980
FR - A - 2 189 448

(73) Patentinhaber: **DYNAMIT NOBEL AKTIENGESELLSCHAFT, Postfach 1209, D-5210 Troisdorf, Bez. Köln (DE)**

(72) Erfinder: **aus der Fünten, Helmut, Dr., Buttergasse, D-5216 Niederkassel-Mondorf (DE)**
Erfinder: **Vollkommer, Norbert, Dr., Schumannstrasse 5, D-5210 Troisdorf-Kriegsdorf (DE)**
Erfinder: **Blaschke, Franz, Dr., Jägerstrasse 24, D-5810 Witten-Annen (DE)**
Erfinder: **Bler, Gerhard, Dr., Altenrather Strasse 2, D-5210 Troisdorf (DE)**

## Beschreibung

Vorliegende Erfindung betrifft transparente, thermoplastisch verformbare Copolyamide mit hoher Glasübergangstemperatur, guter Wärmeformbeständigkeit und hoher, bei Wasserlagerung konstanter Kerbschlagzähigkeit.

Die Erfindung bezieht sich auf Polyamide, die auf der Grundlage der Polykondensationskomponenten Isophthalsäure (IPS), Decandicarbonsäure (DDS), Hexamethylendiamin (HMD) und wahlweise 4,4'-Diaminodicyclohexylmethan als Isomerengemisch (Dicykan) oder Bisaminomethyl-tricyclodecan ( = TCD-Diamin; genaue chemische Formulierung:

3 (4), 8 (9) Bis-aminomethyl-tricyclo [5.2.1.0$^{2,6}$]-decan) aufgebaut sind.

Polyamide aus 2 oder 3 der vorgenannten Komponenten sind bereits bekannt. Sie besitzen jedoch, im Hinblick auf eine Verwendung als transparente Spritzgussmasse, oftmals entscheidende Nachteile.

So werden nach US-PS 2 696 482 und US-PS 2 516 585 aus Dicykan sowie Dimethyldicykan und IPS oder TPS zwar transparente Polyamide erhalten; diese sind jedoch infolge ihrer hohen Glasübergangstemperatur und Schmelzviskosität thermoplastisch kaum mehr verarbeitbar.

Auch ein Polyamid auf der Grundlage von Dicykan und 3-Äthyldecandicarbonsäure ist bekannt (DE-OS 2 125 906) sowie ein Polyamid des Dicykan und der Decandicarbonsäure. Beide besitzen jedoch mit Glasübergangstemperaturen im Bereich 120–130 °C eine zu niedrige Erweichungstemperatur und Wärmeformbeständigkeit.

Das Polyamid auf der Grundlage von HMD und TPS ist teilkristallin und deshalb nicht als transparente Spritzgussmasse einsetzbar.

Polyamide auf der Basis von HMD und IPS oder von HMD und TPS/IPS-Gemischen bestimmter Zusammensetzung sind zwar amorph und transparent, besitzen jedoch mit einer Glasübergangstemperatur im Bereich 130–135 °C eine ebenfalls zu niedrige Wärmeformbeständigkeit. Zusätzlich zeigen sie eine unerwünscht hohe Wasseraufnahme.

Es wurde deshalb versucht, in Polyamiden aus HMD und IPS durch Substitution eines Teils des HMD durch andere Diamine wie Trimethylhexamethylendiamin (DE-OS 2 652 465) oder 1,4-Diamino-cyclohexan oder Diaminodicyclohexylmethan (DE-OS 2 635 085) die Glasübergangstemperatur zu erhöhen.

Es zeigte sich aber, dass Polyamide mit HMD und/oder Dicykan als Diaminkomponenten bei längerer Wasserlagerung eine unerwünschte und für den technischen Einsatz sehr nachteilige Veränderung, welche in einem beträchtlichen Abfall der Kerbschlagzähigkeit besteht, erleiden.

So fällt nach Vergleichsbeispiel A die Kerbschlagzähigkeit eines Polyamids der Zusammensetzung 25 Mol-% TPS + 75 Mol-% IPS – 90 Mol-% HMD + 10 Mol-% Dicykan von 16 KJ/m² (in konditioniertem Zustand) vor der Wasserlagerung auf 10 KJ/m² nach 4 Wochen Wasserlagerung bei Raumtemperatur und auf 4 KJ/m² nach 16 Wochen Wasserlagerung ab.

Ähnliches Verhalten wird auch für ein Polyamid der Zusammensetzung 25 Mol-% TPS + 75 Mol-% IPS – 90 Mol-% HMD + 10 Mol-% Dimethyl-dicykan beobachtet, wo die Kerbschlagzähigkeit von 14 KJ/m² (in konditioniertem Zustand) vor der Wasserlagerung über 8 KJ/m² nach 4 Wochen auf 4 KJ/m² nach 16 Wochen Wasserlagerung abfällt (Vergleichsbeispiel B).

Überraschenderweise zeigen die erfindungsgemässen Polyamide, obwohl auch sie beträchtliche Anteile HMD und/oder Dicykan als Grundbausteine enthalten, diese Nachteile nicht.

Polyamide, erhalten durch Polykondensation eines Gemisches aus den Dicarbonsäuren
1a) 60–90 Mol-%,
    bevorzugt 70–85 Mol-% Isophthalsäure
1b) 10–40 Mol-%,
    bevorzugt 15–30 Mol-% Decandicarbonsäure
sowie den Diaminen
1c) 30–65 Mol-%,
    bevorzugt 40–60 Mol-% Hexamethylendiamin
1d) 35–70 Mol-%,
    bevorzugt 40–60 Mol-% Dicykan
oder Polyamide, erhalten durch Polykondensation eines Gemisches aus den Dicarbonsäuren
2a) 60–90 Mol-%,
    bevorzugt 70–90 Mol-% Isophthalsäure
2b) 10–40 Mol-%,
    bevorzugt 10–30 Mol-% Decandicarbonsäure
sowie aus den Diaminen
2c) 15–55 Mol-%,
    bevorzugt 20–45 Mol-% Hexamethylendiamin
2d) 45–85 Mol-%,
    bevorzugt 55–80 Mol-% TCD-Diamin
wobei stets die Summe aus den Dicarbonsäure komponenten a) + b) sowie die Summe der Diaminkomponenten c) + d) jeweils gleich 100 Mol-% sein muss, zeigen eine solche Abnahme der Kerbschlagzähigkeit bei Wasserlagerung nicht sondern die Kerbschlagzähigkeit bleibt über 18 Tage praktisch konstant.

Gegenstand der Erfindung sind daher Polyamide gemäss den vorstehend unter 1a)–1d) und 2a)–2d) aufgeführten Rezepturen.

Besonders bevorzugt sind Polyamide, die durch Polykondensation eines Gemisches aus
1a) 78–88 Mol-% Isophthalsäure
1b) 12–22 Mol-% Decandicarbonsäure
1c) 47–57 Mol-% Hexamethylendiamin
1d) 43–53 Mol-% Dicykan
oder durch Polykondensation eines Gemisches aus
2a) 80–90 Mol-% Isophthalsäure
2b) 10–20 Mol-% Decandicarbonsäure
2c) 30–40 Mol-% Hexamethylendiamin
2d) 60–70 Mol-% TCD-Diamin,
wobei die Summe 1a) + 1b), 1c) + 1d), 2a) + 2b) und 2c) + 2d) jeweils gleich 100 Mol-% sein muss, erhalten worden sind.

Die erfindungsgemässen Polyamide lassen sich in an sich bekannter Weise auf dem Wege der Schmelzpolykondensation herstellen.

Hierbei können die Kondensationskomponenten auch durch ihre funktionellen Derivate ersetzt werden, beispielsweise Terephthalsäure durch deren Ester, bevorzugt durch DMT.

Werden als Carbonsäurederivate die Ester herangezogen, wird als erste Reaktionsstufe der Polyamid-Herstellung die Aminolyse bevorzugt mit den gesamten zu chargierenden Diaminen, jedoch ohne die Gesamtmenge der gegebenenfalls mitzuverwendenden freien Dicarbonsäuren, vorab zu Ende geführt, bevor letztere in voller Menge zugegeben und die Polykondensation fortgeführt wird.

Die Dicarbonsäure- und Diaminkomponenten werden in annähernd stöchiometrischen Mengen, mit je nach Polykondensationsbedingungen und Flüchtigkeit leichtem Diaminüberschuss bis etwa 10, bevorzugt bis 7, Mol-% eingesetzt. Die Polykondensation erfolgt in der Regel zur Homogenisierung des Salz- bzw. Oligomerengemisches, unter Zusatz von Wasser sowie gegebenenfalls Kondensationshilfsstoffen wie $H_2PO_3$, $H_3PO_3$, Ameisensäure oder Essigsäure.

Ein Vorteil der erfindungsgemässen Zusammensetzungen 1a)–1d) und 2a)–2d) bei der Herstellung der Polyamide über das technisch für diese Zwecke bedeutsame Verfahren der Schmelzpolykondensation ist die Möglichkeit der drucklosen Fahrweise in den Reaktionsphasen der Salz- und Oligomerenbildung der Rezepturen 1) und 2).

Die während des Abdestillierens des Wassers entstehende Oligoamidschmelze wird unter Inertgasstrom bei steigender Temperatur kondensiert und dann im Temperaturbereich 260–300°C, vorzugsweise 270–290°C, gegebenenfalls unter Vakuum, bis zum gewünschten Molgewicht polykondensiert.

Besonders vorteilhaft sind die Eigenschaften der Polyamide hohe Glasübergangstemperaturen im Bereich von 140°–165°, gute Wärmeformbeständigkeit und hohe Kerbschlagzähigkeit, die überraschend bei Berührung mit Wasser oder bei hoher Luftfeuchte unverändert erhalten bleibt oder gar noch ansteigt. Die transparenten, nahezu farblosen Polyamide lassen sich problemlos auf den üblichen Formgebungsmaschinen verarbeiten.

Sie können Zusatzstoffe, insbesondere Füll- und Verstärkungsmaterialien, Flammschutzmittel, Farbstoffe, Stabilisatoren, Verarbeitungshilfsstoffe enthalten.

In den Beispielen sind die Dicarbonsäurekomponenten und Diaminkomponenten in Mol-% oder im Molverhältnis angegeben, so dass sich die Dicarbonsäurekomponenten und die Diaminkomponenten jeweils zu 100 Mol-% ergänzen.

Die Eigenschaften wurden nach folgenden Prüfvorschriften ermittelt:

| | |
|---|---|
| Schlagzähigkeit | DIN 53 453 |
| Kerbschlagzähigkeit | DIN 53 453 |
| Biegefestigkeit (Grenzbiegespannung) | DIN 53 452 |
| Zugfestigkeit (Streckspannung) | DIN 53 455 |
| Reissfestigkeit | DIN 53 455 |
| Reissdehnung | DIN 53 455 |

| | |
|---|---|
| Wärmeformbeständigkeit nach Martens | DIN 53 458 |
| nach Vicat | DIN 53 460 |

Beispiel 1:

Zur Herstellung eines Vorkondensates für ein Polyamid der Rezeptur

85 Mol% IPS
15 Mol% DDS
55 Mol% HMD
45 Mol% Dicykan

werden 405,7 g HMD (3,3 Mol + 6% Überschuss), 567 g Dicykan (2,7 Mol), 846,6 g IPS (5,1 Mol) und 207,2 g DDS (0,9 Mol) zusammen mit 1,5 l Wasser und 2,7 g $H_3PO_3$ in einen Reaktionskolben gegeben und unter Rühren und Überleiten eines schwachen $N_2$-Stromes 0,5 h bei 110°C unter Rückfluss gehalten. Dann wird bei absteigendem Kühler die Temperatur innerhalb von 3 h auf 210°C gesteigert und dabei Wasser abdestilliert.

Das Vorkondensat wird heiss auf ein Blech gegossen und erstarren lassen und dann gebrochen.

Die Menge dreier Ansätze wird in eine Polykondensationsapparatur mit kräftigem Rührwerk eingefüllt und unter $N_2$-Atmosphäre bei 260°C aufgeschmolzen. Nach Anstellen des Rührwerks wird die Temperatur auf 280°C gesteigert und unter einem leichten Vakuum von 0,1 bar die Polykondensation innerhalb von 2,5 h bis zu einer durch ein bestimmtes Drehmoment des Rührens angezeigten Schmelzviskosität des Polyamids zu Ende geführt.

Die transparente, nahezu farblose Polyamid-Schmelze wird durch ein Wasserbad als Strang ausgetragen und granuliert und anschliessend 6 h bei 120°C unter Vakuum getrocknet.

Ausbeute 2,3 kg. Das Polyamid (PA) besitzt eine in Phenol/o-Dichlorbenzol in 1%iger Lösung bestimmte Lösungsviskosität $\eta_{sp/c}$ von 1,88 dl/g und eine Glastemperatur (Tg) von 158°C (DSC = Methode: Differentialthermoanalyse). Der CONH-Gehalt ist 0,671 Mol/100 g. Gewichtsverlust nach TGA (Heizrate 8°/min; Luftatmosphäre): 1% bei 314°C; 5% bei 381°C; 10% bei 392°C und 20% bei 403°C.

Ein Teil des Polyamid-Granulats wird auf einer Spritzgussmaschine Rico HS 32 zu Normkleinstäben und Schulterstäben verspritzt; ein anderer Teil zu 1 mm und 4 mm dicken Platten verpresst.

Die Prüflinge weisen nachstehende wichtige mechanische Eigenschaften sowie folgende Abhängigkeit der Kerbschlagzähigkeit von der Dauer der Wasserlagerung bei Raumtemperatur sowie eine Wasseraufnahme im Normklima und bei Immersion im Gleichgewichtszustand auf:

| | | |
|---|---|---|
| | | (ohne |
| Schlagzähigkeit | 134 KJ/m² | Bruch) |
| Kerbschlagzähigkeit | 13 KJ/m² | |
| Biegefestigkeit | 128 N/mm² | |
| E-Modul | 2700 N/mm² | |
| (Biegeversuch) | | |
| Zugfestigkeit | 99 N/mm² | |
| Reissfestigkeit | 74 N/mm² | |
| Reissdehnung | 44% | |

Wärmeformbeständigkeit
nach ISO/R 75; A     133°C
nach ISO/R 75; B     144°C
nach Martens     107°C
nach Vicat     149°C

Kerbschlagzähigkeit bei
Wasserlagerung (23°C)
   8 Wochen     14,6 KJ/m²
  12 Wochen     13,0 KJ/m²
  26 Wochen     12,2 KJ/m²

Wasseraufnahme bei Normklima im Gleichgewicht:
   Normklima*     3,3%
   Immersion     7,5%

* 23,5°C  50% relative Luftfeuchte

Beispiel 1a und 1b:
   Entsprechende Ergebnisse wurden erzielt mit den Rezepturen
a) IPS/DDS = 80/20 – HMD/Dicykan = 47/53
   mit Tg = 160°C  und
b) IPS/DDS = 88/12 – HMD/Dicykan = 56/44
   mit Tg = 161°C.

Beispiel 2:
   Zur Herstellung eines Vorkondensats der Rezeptur
   80 Mol% IPS
   20 Mol% DDS
   50 Mol% HMD
   50 Mol% Dicykan
werden 251,9 g HMD (2,0 Mol + 6% Überschuss), 420 g Dicykan (2,0 Mol), 531,2 g IPS (3,2 Mol) und 184,2 g DDS (0,8 Mol) sowie 1,5 l Wasser und je 1,8 g $H_3PO_3$ in ein Reaktionsgefäss eingefüllt und unter Rühren und Überleiten eines schwachen $N_2$-Stromes 1 h lang unter Rückfluss gekocht. Binnen 3 h wird die Temperatur unter Abdestillieren des Wassers auf 220°C gesteigert. Der Kolbeninhalt bleibt dabei stets rührbar. Nach 0,5 h bei 220°C wird der Kolbeninhalt heiss auf ein Blech gegossen, erstarren lassen und gebrochen. Drei solcher Ansätze werden vereint und in einem Polykondensationsgefäss mit starkem Rührwerk unter $N_2$-Atmosphäre bei 260°C aufgeschmolzen und bei 280°C unter einem leichten Vakuum vom 0,15 bar innerhalb von 3 h bis zum gewünschten Molgewicht auskondensiert.

   Die transparente, farblose PA-Schmelze wird als Strang durch ein Wasserbad ausgetragen und nach dem Granulieren 6 h unter Vakuum bei 120°C getrocknet.

   Ausbeute: 2,2 kg PA. Das PA besitzt eine Lösungsviskosität $\eta_{sp/c}$ von 1,87 dl/g und eine nach der DSC-Methode gemessene Tg von 157°C. Der CONH-Gehalt ist 0,654 Mol/100 g. Der Gewichtsverlust nach TGA (8°/min; Luftatmosphäre): 1% bei 361°C; 5% bei 385°C; 10% bei 395°C und 20% bei 409°C.

   Ein Teil der PA wird auf einer Rico HS 32-Spritzgiessmaschine zu Normkleinstäben und Schulterstäben verarbeitet; ein anderer Teil zu 1 mm und 4 mm dicken Platten verpresst.

   Nachstehend eine Zusammenstellung einiger mechanischer Eigenschaften sowie die Abhängigkeit der Kerbschlagzähigkeit von der Dauer der Wasserlagerung bei Raumtemperatur. Weiterhin die Wasseraufnahme im Normklima und bei Immersion im Gleichgewichtszustand.

Schlagzähigkeit     147 KJ/m²   (ohne Bruch)
Kerbschlagzähigkeit     16,8 KJ/m²
Biegefestigkeit     130 N/mm²
E-Modul     2500 N/mm²
(Biegeversuch)
Zugfestigkeit     88 N/mm²
Reissfestigkeit     77 N/mm²
Reissdehnung     32%

Wärmeformbeständigkeit
nach ISO/R 75; A     136°C
nach ISO/R 75; B     140°C
nach Martens     106°C

Kerbschlagzähigkeit bei
Wasserlagerung (23°C)
   8 Wochen     17  KJ/m²
  12 Wochen     18  KJ/m²
  26 Wochen     16,3 KJ/m²

Wasseraufnahme
   Normklima     3,2%
   Immersion     7,2%

Beispiel 3:
   Zur Herstellung eines Vorkondensates für ei PA der Zusammensetzung
   85 Mol% IPS
   15 Mol% DDS
   35 Mol% HMD
   65 Mol% TCD-Diamin
werden 127,9 g HMD (1,05 Mol + 5% Übe schuss), 378,3 g TCD-Diamin (1,95 Mol), 423,3 IPS, (2,55 Mol) und 103,5 g DDS (0,45 Mol) zusam men mit 350 ml Wasser und 0,9 g $H_2PO_3$ in eine Reaktionskolben eingebracht und zur Homogen sierung und Salzbildung 1 h bei 110°C gerühr Innerhalb von 3 h wird unter Überleiten eine schwachen $N_2$-Stromes die Temperatur auf 220° gesteigert, und bei absteigendem Kühler werde die unter diesen Bedingungen flüchtigen Bestand teile abdestilliert. Das Vorkondensat wird auf ei Blech gegossen und erstarren lassen.

   Nach dem Vermahlen auf eine Korngrösse zw schen 0,5 und 3 mm werden die Vorkondensa dreier Ansätze vereinigt und in einem Vakuun Trockenschrank auf einer mit Aluminium-Fol ausgekleideten Blechwanne in einer Schichthöh von ca. 0,5 cm bei 230°C unter Vakuum 6 h lar auf eine Lösungsviskosität $\eta_{sp/c}$ = 2,1 hochko densiert. Die Glasübergangstemperatur des PA i 156°C (DSC-Methode), der CONH-Gehalt ist 0,6 Mol/100 g.

Das zusammengesinterte PA wird zerkleinert und wie in Beispiel 1 zu Normkleinstäben, Schulterstäben und Pressplatten verarbeitet.

Nachstehend einige mechanische Eigenschaften, die Abhängigkeit der Kerbschlagzähigkeit von der Dauer der Wasserlagerung und die Wasseraufnahme im Normklima sowie bei Immersion im Gleichgewichtszustand.

| | | (ohne |
|---|---|---|
| Schlagzähigkeit | 139 KJ/m² | Bruch) |
| Kerbschlagzähigkeit | 9,9 KJ/m² | |
| Biegefestigkeit | 164 N/mm² | |
| E-Modul | 3150 N/mm² | |
| (aus Biegeversuch) | | |
| Zugfestigkeit | 96 N/mm² | |
| Reissfestigkeit | 87 N/mm² | |
| Reissdehnung | 19% | |

Wärmeformbeständigkeit
nach ISO/R 75; A     126°C
nach ISO/R 75; B     137°C

Kerbschlagzähigkeit bei
Wasserlagerung (23°C)
    8 Wochen     10 KJ/m²
    12 Wochen     10,8 KJ/m²
    26 Wochen     9,6 KJ/m²

Wasseraufnahme
    Normklima     3,0%
    Immersion     6,8%.

Beispiel 3a und 3b:
Entsprechende Eigenschaften wurden erreicht mit den Zusammensetzungen:
a) IPS/DDS = 80/20 – HMD/TCD-Diam. = 30/70 mit Tg = 151°C und
b) IPS/DDS = 90/10 – HMD/TCD-Diam. = 40/60 mit Tg = 162°C.

Vergleichsbeispiel A:
Zur Herstellung eines Vorkondensates für ein PA der Zusammensetzung
    25 Mol-% DMT
    75 Mol-% IPS
    90 Mol-% HMD
    10 Mol-% Dicykan
werden 537,6 g HMD (4,5 Mol + 3% Überschuss), 105 g Dicykan (0,5 Mol) und 242,5 g DMT (1,25 Mol) sowie 498 g IPS (3,0 Mol) zusammen mit 400 ml Wasser und 2,0 g $H_2PO_3$ in einen Reaktionskolben gegeben und unter Rühren und Überleiten eines schwachen $N_2$-Stromes 3 h zwecks Aminolyse unter Rückfluss gehalten. Nach Zusatz von weiteren 124,5 g IPS (0,75 Mol) wird bei absteigendem Kühler die Temperatur innerhalb von 2,5 h auf 220°C erhöht und das Vorkondensat nach dem Erkalten zerkleinert.

Das Vorkondensat dreier Ansätze wird in einer Polykondensationsapparatur wie in Beispiel 1 unter einem leichten Vakuum von 0,1 bar bei 280°C auskondensiert.

Die ausgetragene und granulierte PA-Schmelze ist transparent und nahezu farblos. Das PA besitzt eine Lösungsviskosität $\eta_{sp/c}$ von 1,89 dl/g und eine Glastemperatur (DSC-Methode) von 144°C.

Das PA wird zu Normkleinstäben, Schulterstäben und zu 1 mm und 4 mm dicken Pressplatten verarbeitet, und nachstehende Eigenschaften wurden ermittelt:

| | | (ohne |
|---|---|---|
| Schlagzähigkeit | 132 KJ/m² | Bruch) |
| Kerbschlagzähigkeit | 16 KJ/m² | |
| Reissfestigkeit | 75 N/mm² | |
| Reissdehnung | 60 % | |

Wärmeformbeständigkeit
nach ISO/R 75; A     125°C
nach ISO/R 75; B     136°C
Martens     94°C

Kerbschlagzähigkeit bei
Wasserlagerung (23°C)
    4 Wochen     10 KJ/m²
    12 Wochen     6 KJ/m²
    16 Wochen     4 KJ/m²

Vergleichsbeispiel B:
Zur Herstellung eines Vorkondensates für ein PA der Zusammensetzung
    25 Mol% DMT
    75 Mol% IPS
    90 Mol% HMD
    10 Mol% 3,3'-Dimethyl-Dicykan

werden 430,1 g HMD (3,6 Mol + 3% Überschuss), 95,2 g 3,3'-Dimethyl-Dicykan (0,4 Mol), 194 g DMT (1,0 Mol) und 332 g IPS (2,0 Mol) zusammen mit 350 ml Wasser und 1,5 g $H_2PO_3$ in einen Reaktionskolben gegeben und unter Rühren und Überleiten eines schwachen $N_2$-Stromes 3 h lang zwecks Aminolyse unter Rückfluss gehalten. Nach Zusatz von weiteren 166 g IPS (1,0 Mol) wird bei absteigendem Kühler die Temperatur innerhalb von 3 h auf 220°C erhöht, und alle unter diesen Bedingungen flüchtigen Bestandteile werden abdestilliert. Nach dem Abkühlen wird das Vorkondensat zerkleinert.

Nach dem Auskondensieren wie im vorstehenden Vergleichsbeispiel A wird ein transparentes, nahezu farbloses PA mit einer Lösungsviskosität von 1,79 dl/g und einer Glastemperatur von 149°C (DSC-Methode) erhalten.

Das PA wird zu Normkleinstäben und Schulterstäben sowie zu 1 mm und 4 mm dicken Pressplatten verarbeitet, und nachstehende Eigenschaften wurden ermittelt:

| | | (ohne |
|---|---|---|
| Schlagzähigkeit | 138 KJ/m² | Bruch) |
| Kerbschlagzähigkeit | 14 KJ/m² | |
| Reissfestigkeit | 74 N/mm² | |
| Reissdehnung | 45% | |

Wärmeformbeständigkeit
nach ISO/R 75; A     129 °C
nach ISO/R 75; B     141 °C
Martens     98 °C

Kerbschlagzähigkeit bei
Wasserlagerung (23 °C)
    4 Wochen     8,8 KJ/m²
    12 Wochen     7    KJ/m²
    16 Wochen     4    KJ/m²

**Patentansprüche für die Vertragsstaaten: BE, CH, DE, FR, GB, IT, LI, LU, NL, SE**

1. Polyamide, erhalten durch Polykondensation von
1a) 60–90 Mol-%,
    bevorzugt 70–85 Mol-% Isophthalsäure
1b) 10–40 Mol-%,
    bevorzugt 15–30 Mol-% Decandicarbonsäure
1c) 30–65 Mol-%,
    bevorzugt 40–60 Mol-% Hexamethylendiamin
1d) 35–70 Mol-%,
    bevorzugt 40–60 Mol-% Dicykan
    (= 4,4'-Diaminodicyclohexylmethan als Isomerengemisch)
oder Polyamide, erhalten durch Polykondensation von
2a) 60–90 Mol-%,
    bevorzugt 70–90 Mol-% Isophthalsäure
2b) 10–40 Mol-%,
    bevorzugt 10–30 Mol-% Decandicarbonsäure
2c) 15–55 Mol-%,
    bevorzugt 20–45 Mol-% Hexamethylendiamin
2d) 45–85 Mol-%,
    bevorzugt 55–80 Mol-% TCD-Diamin
    (= Bisaminomethyl-tricyclodecan)
wobei stets die Summe aus den Dicarbonsäurekomponenten a) + b) sowie die Summe der Diaminkomponenten c) + d) jeweils gleich 100 Mol-% sein muss.

2. Polyamide, erhalten durch Polykondensation eines Gemisches aus
1a) 78–88 Mol-% Isophthalsäure
1b) 12–22 Mol-% Decandicarbonsäure
1c) 47–57 Mol-% Hexamethylendiamin
1d) 43–53 Mol-% Dicykan
oder durch Polykondensation eines Gemisches aus
2a) 80–90 Mol-% Isophthalsäure
2b) 10–20 Mol-% Decandicarbonsäure
2c) 30–40 Mol-% Hexamethylendiamin
2d) 60–70 Mol-% TCD-Diamin,
wobei die Summe 1a) + 1b), 1c) + 1d), 2a) + 2b) und 2c) + 2d) jeweils gleich 100 Mol-% sein muss.

3. Verwendung der Polyamide nach einem der Ansprüche 1 oder 2 zur Herstellung transparenter Formkörper.

**Patentansprüche für den Vertragsstaat: AT**

1. Verfahren zur Herstellung von Polyamiden, dadurch gekennzeichnet, dass man die Komponenten in folgenden Molverhältnissen polykondensiert:

1a) 60–90 Mol-%,
    bevorzugt 70–85 Mol-% Isophthalsäure
1b) 10–40 Mol-%,
    bevorzugt 15–30 Mol-% Decandicarbonsäure
1c) 30–65 Mol-%,
    bevorzugt 40–60 Mol-% Hexamethylendiamin
1d) 35–70 Mol-%,
    bevorzugt 40–60 Mol-% Dicykan
    (= 4,4'-Diaminodicyclohexylmethan als Isomerengemisch)
oder
2a) 60–90 Mol-%,
    bevorzugt 70–90 Mol-% Isophthalsäure
2b) 10–40 Mol-%,
    bevorzugt 10–30 Mol-% Decandicarbonsäure
2c) 15–55 Mol-%,
    bevorzugt 20–45 Mol-% Hexamethylendiamin
2d) 45–85 Mol-%,
    bevorzugt 55–80 Mol-% TCD-Diamin,
    (= Bisaminomethyl-tricyclodecan)
wobei stets die Summe aus den Dicarbonsäurekomponenten a) + b) sowie die Summe der Diaminkomponenten c) + d) jeweils gleich 100 Mol-% sein muss.

2. Verfahren zur Herstellung von Polyamiden, dadurch gekennzeichnet, dass man ein Gemisch der Komponenten in folgenden Molverhältnissen polykondensiert:
1a) 78–88 Mol-% Isophthalsäure
1b) 12–22 Mol-% Decandicarbonsäure
1c) 47–57 Mol-% Hexamethylendiamin
1d) 43–53 Mol-% Dicykan
oder
2a) 80–90 Mol-% Isophthalsäure
2b) 10–20 Mol-% Decandicarbonsäure
2c) 30–40 Mol-% Hexamethylendiamin
2d) 60–70 Mol-% TCD-Diamin,
wobei die Summe 1a) + 1b), 1c) + 1d), 2a) + 2b) und 2c) + 2d) jeweils gleich 100 Mol-% sein muss.

3. Verwendung der nach einem der Ansprüche 1 oder 2 hergestellten Polyamide zur Fertigung transparenter Formkörper.

**Claims for the contracting States: BE, CH, DE, FR, GB, IT, LI, LU, NL, SE**

1. Polyamides obtained by polycondensation of
1a) 60–90 mol%,
    preferably 70–85 mol% isophthalic acid
1b) 10–40 mol%,
    preferably 15–30 mol% decane dicarboxylic acid
1c) 30–65 mol%,
    preferably 40–60 mol% hexamethylene diamine
1d) 35–70 mol%,
    preferably 40–60 mol% dicycane
    (= 4,4'-diaminodicyclohexylmethane isomer mixture)
or polyamides obtained by polycondensation of
2a) 60–90 mol%,
    preferably 70–90 mol% isophthalic acid
2b) 10–40 mol%,
    preferably 10–30 mol% decane dicarboxylic acid

2c) 15–55 mol%,
preferably 20–45 mol% hexamethylene diamine

2d) 45–85 mol%,
preferably 55–80 mol% TCD-diamine
(= bis-aminomethyl-tricyclodecane)

wherein the sum of the dicarboxylic acid components a) + b) as well as the sum of the diamine components c) + d) must always respectively be equal to 100 mol%.

2. Polyamides obtained by polycondensation of a mixture of

1a) 78–88 mol% isophthalic acid
1b) 12–22 mol% decane dicarboxylic acid
1c) 47–57 mol% hexamethylene diamine
1d) 43–53 mol% dicycane

or by polycondensation of a mixture of

2a) 80–90 mol% isophthalic acid
2b) 10–20 mol% decane dicarboxylic acid
2c) 30–40 mol% hexamethylene diamine
2d) 60–70 mol% TCD-diamine

wherein the sum 1a) + 1b), 1c) + 1d), 2a) + 2b), 2c) + 2d) must respectively be equal to 100 mol%.

3. Use of the polyamides according to one of claims 1 or 2 for the production of transparent moulded articles.

### Claims for the contracting State: AT

1. Process for the production of polyamides, characterised in that the components in the following molar ratios are polycondensed:

1a) 60–90 mol%,
preferably 70–85 mol% isophthalic acid
1b) 10–40 mol%,
preferably 15–30 mol% decane dicarboxylic acid
1c) 30–65 mol%,
preferably 40–60 mol% hexamethylene diamine
1d) 35–70 mol%,
preferably 40–60 mol% dicycane
(= 4,4'-diaminodicyclohexylmethane isomer mixture)

or

2a) 60–90 mol%,
preferably 70–90 mol% isophthalic acid
2b) 10–40 mol%,
preferably 10–30 mol% decane dicarboxylic acid
2c) 15–55 mol%,
preferably 20–45 mol% hexamethylene diamine
2d) 45–85 mol%,
preferably 55–80 mol% TCD-diamine
(= bis-aminomethyl-tricyclodecane)

wherein the sum of the dicarboxilic acid components a) + b) as well as the sum of the diamine components c) + d) must always respectively be equal to 100 mol%.

2. Process for the production of polyamides, characterised in that a mixture of the components in the following molar ratios is polycondensed:

1a) 78–88 mol% isophthalic acid
1b) 12–22 mol% decane dicarboxylic acid

1c) 47–57 mol% hexamethylene diamine
1d) 43–53 mol% dicycane

or

2a) 80–90 mol% isophthalic acid
2b) 10–20 mol% decane dicarboxylic acid
2c) 30–40 mol% hexamethylene diamine
2d) 60–70 mol% TCD-diamine

wherein the sum 1a) + 1b), 1c) + 1d), 2a) + 2b), 2c) + 2d) must respectively be equal to 100 mol%.

3. Use of the polyamides produced according to one of claims 1 or 2 for the manufacture of transparent moulded articles.

### Revendications pour les Etats contractants: BE, CH, DE, FR, GB, IT, LI, LU, NL, SE

1. Procédé de préparation de polyamides, caractérisé en ce qu'on soumet à polycondensation, selon les rapports molaires suivants, les composants:

1a) 60 à 90 moles %,
de préférence 70 à 85 moles %, d'acide isophthalique
1b) 10 à 40 moles %,
de préférence 15 à 30 moles %, d'acide décanedicarboxylique
1c) 30 à 65 moles %,
de préférence 40 à 60 moles %, d'hexaméthylènediamine
1d) 35 à 70 moles %,
de préférence 40 à 60 moles %, de dicykan (= diamino-4,4' dicyclohexylméthane sous forme d'un mélange d'isomères)

ou

2a) 60 à 90 moles %,
de préférence 70 à 90 moles %, d'acide isophthalique
2b) 10 à 40 moles %,
de préférence 10 à 30 moles %, d'acide décanedicarboxylique
2c) 15 à 55 moles %,
de préférence 20 à 45 moles %, d'hexaméthylènediamine
2d) 45 à 85 moles %,
de préférence 55 à 80 moles %, de TCD-diamine
(= bisaminométhyl-tricyclodécane),

la somme des composants acides dicarboxyliques a) + b) ainsi que la somme des composants diamines c) + d) devant à chaque fois égaler 100 moles %.

2. Procédé de préparation de polyamides, caractérisé en ce qu'on soumet à polycondensation, selon les rapports molaires suivants, un mélange des composants:

1a) 78 à 88 moles % d'acide isophthalique
1b) 12 à 22 moles % d'acide décanedicarboxylique
1c) 47 à 57 moles % d'hexaméthylènediamine
1d) 43 à 53 moles % de dicykan,

ou

2a) 80 à 90 moles % d'acide isophthalique
2b) 10 à 20 moles % d'acide décanedicarboxylique
2c) 30 à 40 moles % d'hexaméthylènediamine

2d) 60 à 70 moles % de TCD-diamine,
la somme 1a) + 1b, 1c) + 1d, 2a) + 2b) et 2c) + 2d)
devant chacune toujours égaler 100 moles %.

3. Utilisation des polyamides, préparés selon les revendications 1 ou 2, pour réaliser des objets moulés transparents.

**Revendications pour l'Etat contractant: AT**

1. Polyamides, obtenus par polycondensation de:
1a) 60 à 90 moles %,
de préférence 70 à 85 moles %, d'acide isophthalique,
1b) 10 à 40 moles %,
de préférence 15 à 30 moles %, d'acide décanedicarboxylique,
1c) 30 à 65 moles %,
de préférence 40 à 60 moles %, d'hexaméthylènediamine,
1d) 35 à 70 moles %,
de préférence 40 à 60 moles %, de dicykan,
(= diamino-4,4' dicyclohexylméthane sous forme d'un mélange d'isomères),
ou polyamides, obtenus par polycondensation de:
2a) 60 à 90 moles %,
de préférence 70 à 90 moles %, d'acide isophthalique,
2b) 10 à 40 moles %,
de préférence 10 à 30 moles %, d'acide décanedicarboxylique,

2c) 15 à 55 moles %,
de préférence 20 à 45 moles %, d'hexaméthylènediamine,
2d) 45 à 85 moles %,
de préférence 55 à 80 moles %, de TCD-diamine,
(= bisaminométhyl-tricyclodécane),
la somme des composants acides dicarboxyliques a) + b) ainsi que la somme des composants diamines c) + d) devant à chaque fois égaler 100 moles %.

2. Polyamides obtenus par polycondensation d'un mélange de:
1a) 78 à 88 moles % d'acide isophthalique
1b) 12 à 22 moles % d'acide décanedicarboxylique
1c) 47 à 57 moles % d'hexaméthylènediamine
1d) 43 à 53 moles % de dicykan,
ou par polycondensation d'un mélange de:
2a) 80 à 90 moles % d'acide isophthalique
2b) 10 à 20 moles % d'acide décanedicarboxylique
2c) 30 à 40 moles % d'hexaméthylènediamine
2d) 60 à 70 moles % de TCD-diamine,
la somme 1a) + 1b), 1c) + 1d), 2a) + 2b) et 2c) + 2d) devant à chaque fois égaler 100 moles %.

3. Utilisation des polyamides selon l'une des revendications 1 ou 2 pour la fabrication d'objets moulés transparents.